(19) Europäisches Patentamt
European Patent Office
Office européen des brevets

(11) **EP 3 901 233 A1**

(12) **EUROPEAN PATENT APPLICATION**
published in accordance with Art. 153(4) EPC

(43) Date of publication:
**27.10.2021 Bulletin 2021/43**

(51) Int Cl.:
***C09K 3/10*** *(2006.01)*  ***F16B 39/22*** *(2006.01)*

(21) Application number: **19901074.5**

(86) International application number:
**PCT/JP2019/043985**

(22) Date of filing: **08.11.2019**

(87) International publication number:
**WO 2020/129459 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2018 JP 2018236486**

(71) Applicant: **ThreeBond Co., Ltd.**
**Tokyo 192-0398 (JP)**

(72) Inventors:
• **NIWA, Masayuki**
  **Hachioji-shi,**
  **Tokyo 192-0398 (JP)**
• **WASHINO, Erika**
  **Hachioji-shi,**
  **Tokyo 192-0398 (JP)**

(74) Representative: **Petty, Catrin Helen**
  **Venner Shipley LLP**
  **200 Aldersgate**
  **London EC1A 4HD (GB)**

(54) **SEALING AGENT FOR SCREW MEMBER AND SCREW MEMBER OBTAINED USING SAME**

(57) An object of the present invention is to provide a sealing agent for a screwing member which has no sagging occurred when being applied to a screwing member and dried, and is excellent in adhesion such that in a state where water adheres to a processed bolt after drying, a resin does not peel off from an interface when tightened with a nut. The present invention relates to a sealing agent for a screwing member including the following component (A), component (B), and component (C), 0.15 to 5.00 parts by mass of active components of the component (C) is contained with respect to 100 parts by mass of a solid content of the component (B):
component (A): a filler;
component (B): a self-crosslinking aqueous emulsion having a (meth)acrylic-styrene copolymer in which a glass transition temperature Tg is 0°C or higher; and
component (C): a non-urethane-based nonionic thickener.

EP 3 901 233 A1

**Description**

**TECHNICAL FIELD**

The present invention relates to a sealing agent for a screwing member and a screwing member using the same.

**BACKGROUND ART**

In the related art, a sealing tape has been used as a sealing agent for adhesion of a screw portion such as a pipe joint. The purpose of using the sealing tape for the screw portion is to prevent leakage of liquid, gas, or the like by filling gaps generated in connecting parts or the like of the pipes. The sealing tape contains a fluororesin as a main raw material, and with the softness thereof, it easily adheres to the screw portion, and even when tightened to equipment, the fluororesin flexibly deforms and can fill the clearance with the equipment. From this, the sealing tape has been used as a sealing agent. As a method of covering a screwing member with this sealing tape, winding of sealing tape has been performed by using a winding device or by hand. In the device disclosed in JP 2006-052296 A, which is such a sealing tape winding device, a screwing member and a sealing tape are set in the device, respectively, and coating is performed by switching ON/OFF of a switch. However, the device according to the document can cover only one screwing member by switching ON/OFF once for each device, and since the screwing member must be attached continuously, the work efficiency is poor, and there is a problem in terms of productivity.

Therefore, in order to solve this problem, a sealing agent made of a liquid resin composition has been developed. With the sealing agent made of this liquid resin composition, it is not necessary to process the screwing members one by one. For example, a plurality of screwing members can be processed by arranging the screwing members on one surface of a screwing member fixing panel, performing a single dipping operation on the screwing members, and drying the members. Further, since the composition is liquid, the degree of freedom in the application range is higher than that of the sealing tape, so that it can be automatically applied to various sizes by a dedicated machine.

A sealing agent made of such a liquid resin composition is generally formed of microcapsules containing an adhesive, fillers, or the like, as well as a component called a binder or the like, which is an element for adhering them to a screwing member. JP 2010-138340 A discloses a microcapsule type adhesive to be applied to a screwing member and a nut member. The document discloses that it is preferable to use a sodium polyacrylic acid ester resin, a sodium alginate resin, polyvinyl alcohol, a water-soluble polyacetal resin, or the like, as a binder.

**SUMMARY OF INVENTION**

However, in a case where the above-mentioned type of resin is used as a binder, there is a problem that the liquid resin composition (hereafter, also simply referred to as "sealing agent") is liable to sag before being applied to a screwing member such as a bolt and the like and dried. In addition, when a bolt processed after drying (hereafter, also simply referred to as "processed bolt") is tightened with a nut, the resin is easily peeled off from an interface of the screw, and when the nut is tightened with water adhering to the processed bolt, a coating film is more easily peeled off. That is, there is a problem that the adhesion is insufficient.

Therefore, the present invention has been made in view of the above situation, and an object thereof is to provide a sealing agent for a screwing member, which has no sagging occurred when being applied to a screwing member (for example, bolt) and dried, and is excellent in adhesion such that even in a case where water adheres to a processed screwing member (for example, a processed bolt), a resin does not peel off from an interface when tightened with a nut.

A preferable embodiment of the present invention has the following gist. However, the present invention is not limited to these embodiments. According to one embodiment of the present invention relates to the following [1]:

[1] A sealing agent for a screwing member including the following component (A), component (B), and component (C), 0.15 to 5.00 parts by mass of active components of the component (C) is contained with respect to 100 parts by mass of a solid content of the component (B):

component (A): a filler,
component (B): a self-crosslinking aqueous emulsion having a (meth)acrylic-styrene copolymer in which a glass transition temperature Tg of a cured product is 0°C or higher,
component (C): a non-urethane-based nonionic thickener;
wherein, the "glass transition temperature Tg (°C) of a cured product" represents "theoretical glass transition temperature Tg (°C) of the (meth)acrylic-styrene copolymer contained in the self-crosslinking aqueous emulsion which is the component (B), calculated from FOX equation". That is, the component (B), "a self-crosslinking aqueous emulsion having a (meth)acrylic-styrene copolymer in which a glass transition temperature Tg of a cured product is 0°C or higher" represents "a self-crosslinking aqueous emulsion containing a (meth)acrylic-styrene copolymer in which a theoretical glass transition temperature Tg calculated from FOX equation is 0°C or higher".

In addition, the present invention includes the following embodiments according to [2] to [6] as nonlimiting examples of preferable embodiments:

[2] The sealing agent for a screwing member according to [1], wherein a self-crosslinking reaction of the component (B) is due to a dehydration condensation reaction;

[3] The sealing agent for a screwing member according to [1] or [2], wherein the self-crosslinking reaction of the component (B) is a carbonyl-hydrazide crosslink or a silane crosslink;

[4] The sealing agent for a screwing member according to any one of [1] to [3], wherein the component (C) is an aminoplast-based nonionic thickener;

[5] The sealing agent for a screwing member according to any one of [1] to [4], wherein 15 parts by mass or more and 80 parts by mass or less of a solid content of the component (B) is contained with respect to 100 parts by mass of the component (A);

[6] A screwing member in which at least a part of a screwing portion is covered with the sealing agent for a screwing member according to any one of [1] to [5].

[7] A method for producing a sealing agent for a screwing member according to any one of [1] to [5], including mixing the component (A), the component (B), and the component (C) such that an active component of the component (C) is 0.15 to 5.00 parts by mass with respect to 100 parts by mass of a solid content of the component (B).

## DESCRIPTION OF EMBODIMENTS

Hereinbelow, the embodiments of the present invention are described. However, the present invention is not limited to the following embodiments. In the present specification, an expression "to" or "from" indicating a range of an upper limit value and a lower limit value includes the upper and lower limit values themselves in the range. That is, "X to Y" and "X to Y" indicating a range include X and Y and mean "X or more and Y or less". Unless otherwise specified, measurements of operations, physical properties, and the like are performed under the conditions of room temperature (20 to 25°C)/relative humidity 40 to 50% RH.

Further, in the present specification, an acryloyl group and a methacryloyl group are collectively referred to as a (meth)acryloyl group. A compound having a (meth)acryloyl group is also referred to as a (meth)acrylate. Similarly, a compound or the like having (meth) such as (meth)acrylic acid and the like is a general term for a compound having "meth" and a compound having no "meth" in the name.

According to one aspect of the present invention relates to a sealing agent for a screwing member including the following component (A), component (B), and component (C), 0.15 to 5.00 parts by mass of active components of the component (C) is contained with respect to 100 parts by mass of a solid content of the component (B):

component (A): a filler,

component (B): a self-crosslinking aqueous emulsion having a (meth)acrylic-styrene copolymer in which a glass transition temperature Tg of a cured product is 0°C or higher, and

component (C): a non-urethane-based nonionic thickener. According to the aspect of the present invention, there is provided a sealing agent for a screwing member, which has no sagging occurred when being applied to a screwing member (for example, bolt) and dried, and is excellent in adhesion such that in a case where water adheres to a processed bolt, a coating film does not peel off from an interface when tightened with a nut.

<Component (A)>

The sealing agent for a screwing member according to one embodiment of the present invention contains a filler as a component (A). The component (A) is not particularly limited as long as it is a filler. Examples of the filler include silica, talc, calcium carbonate, diatomaceous earth, mica, polytetrafluoroethylene resin powder, nylon resin powder, polyethylene resin powder, (meth)acrylic resin powder, glass fine particle powder, metal oxide fine particle powder, microcapsules containing curable composition, and the like. These may be used alone, or two or more thereof may be mixed to be used. From the viewpoint of sealing property, it is preferable to use polytetrafluoroethylene resin powder, polyethylene resin powder, nylon resin powder, and microcapsules containing a curable composition, and from the viewpoint of heat resistance, polytetrafluoroethylene resin powder or silica is preferably used. Among these, polytetrafluoroethylene resin powder is more preferable.

The shape of the filler may be a fixed shape such as a spherical shape, a plate shape, or a needle shape, or may be a non-fixed shape. In a case where a spherical filler is used, an average particle size (D50) is not particularly limited, and is preferably 0.1 to 200 $\mu$m, more preferably 0.5 to 180 $\mu$m, and still more preferably 1.0 to 150 $\mu$m. In a case where a non-fixed shape is used, an average particle size (D50) is not particularly limited, and is preferably 0.1 to 200 $\mu$m, more preferably 0.5 to 180 $\mu$m, and still more preferably 1.0 to 150 $\mu$m. Here, a method for measuring the average particle size (D50) is based on a laser diffraction/scattering method. It is preferable to use two or more kinds of fillers having an average particle size in combination. This is because the combined use of these makes it easier to obtain a close-packed structure when applied to the screwing portion, which leads to a better appearance. In a case where two or more kinds of average particle sizes are used together as a filler, the value of the relatively largest average particle size (D50) with respect to the relatively smallest average particle size (D50) is not particularly limited, and is preferable 1.5 to 400, more preferably 2 to 200, still more preferably 2 to 100, even more preferably 3 to 80, and particularly preferably 4 to 60. This is because if it is within this range, it is easy to obtain a close-packed structure, which leads to a better appearance and excellent sealing property.

In a case where two or more kinds of average particle sizes are used together as a filler, the ratio (mass ratio) of an additional amount (content) of a filler having the relatively largest average particle size (D50) with respect to an additional amount (content) of a filler having the relatively smallest average particle size (D50) is not particularly limited, and is preferable 0.01 to 100, more preferably 0.1 to 10, and still more preferably 0.5 to 2. This is because if it is within this range, it is easy to obtain a close-packed structure, which leads to an appearance and excellent sealing property.

As the filler, a commercially available product or a synthetic product may be used. Commercially available products are not particularly limited, and examples of the polytetrafluoroethylene resin powder include LUBRON (registered trademark) L-5F available from Daikin Industries, Ltd. and KT-300M available from Kitamura Co., Ltd, and the like.

<Component (B)>

The sealing agent for a screwing member according to one embodiment of the present invention is a self-crosslinking aqueous emulsion having a (meth)acrylic-styrene copolymer in which a glass transition temperature Tg of a cured product is 0°C or higher as a component (B). As described above, "a self-crosslinking aqueous emulsion having a (meth)acrylic-styrene copolymer in which a glass transition temperature Tg of a cured product is 0°C or higher" represents "a self-crosslinking aqueous emulsion containing a (meth)acrylic-styrene copolymer in which a theoretical glass transition temperature Tg calculated from FOX equation is 0°C or higher". The component (B) is not particularly limited as long as it is a self-crosslinking aqueous emulsion in which a (meth)acrylic-styrene copolymer having a glass transition temperature Tg (that is, theoretical glass transition temperature Tg (°C) of the (meth)acrylic-styrene copolymer contained in the self-crosslinking aqueous emulsion which is the component (B), calculated from FOX equation. The same applies hereinafter) of the cured product of 0°C or higher. Here, the aqueous emulsion refers to a matter in which polymer particles produced by adding a polymerizable monomer, a surfactant, and a polymerization initiator and emulsion-polymerizing are stably dispersed in water. The (meth)acrylic-styrene copolymer is obtained in a case of using a monomer containing a (meth)acrylic monomer (a (meth)acryloyl group-containing monomer) and a styrene monomer (a monomer having a substituted or unsubstituted styrene structure) as the polymerizable monomer. Among these, those obtained in a case of using only a (meth) acrylic monomer and a styrene monomer are preferable.

The (meth)acrylic monomer is not particularly limited, and examples thereof include (meth)acrylate compounds such as (meth)acrylic acid, ethyl (meth)acrylate, n-butyl (meth)acrylate, tert-butyl (meth)acrylate, isobutyl (meth)acrylate, 2-ethylhexyl (meth)acrylate, isodecyl (meth)acrylate, butoxydiethylene glycol (meth)acrylate, 2-(meth)acryloyloxyethyl succinic acid, 2-(meth)acryloyloxyethyl hexahydrophthalic acid, lauryl (meth)acrylate, stearyl (meth)acrylate, tetrahydrofurfuryl (meth)acrylate, cyclohexyl (meth)acrylate, dicyclopentanyl (meth)acrylate, dicyclopentenyl (meth)acrylate, dicyclopentenyloxy (meth)acrylate, isobornyl (meth)acrylate, adamantyl (meth)acrylate, benzyl (meth)acrylate, phenyl (meth)acrylate, phenoxyethyl (meth)acrylate, phenoxydiethylene glycol (meth)acrylate, phenoxytetraethylene glycol (meth)acrylate, nonylphenoxyethyl (meth)acrylate, butoxyethyl (meth)acrylate, 2-hydroxyethyl (meth)acrylate, 2-hydroxypropyl (meth)acrylate, 4-hydroxybutyl (meth)acrylate, glycerol (meth)acrylate, trifluoroethyl (meth)acrylate, (meth)acryloyloxyoxyethyl acid phosphate, 2-hydroxyethyl (meth)acrylate phosphate, $\gamma$-(meth)acryloyloxypropyltrimethoxysilane, (meth)acryloylmorpholine, morpholinoethyl (meth)acrylate, dimethylaminoethyl (meth)acrylate, diethylaminoethyl (meth)acrylate, N,N-dimethylaminoethyl (meth)acrylate, N,N-dimethylaminopropyl (meth)acrylate, ethylene glycol di(meth)acrylate, diethylene glycol di(meth)acrylate, triethylene glycol di(meth)acrylate, tetraethylene glycol di(meth)acrylate, 1,6-Hexanediol di(meth)acrylate, 1,9-nonanediol di(meth)acrylate, glycerin di(meth)acrylate, neopentyl glycol di(meth)acrylate, dicyclopentenyldi(meth)acrylate, di(meth)acryloyl isocyanurate, trimethylolpropane tri(meth)acrylate, pentaerythritol tri(meth)acrylate, tris((meth)acryloyloxyethyl) isocyanurate, ditrimethylolpropane tetra(meth)acrylate, pentaerythritol tetra (meth)acrylate, dipentaerythritol monohydroxypenta (meth)acrylate, dipentaerythritol hexa (meth)acrylate, and the like. The (meth)acrylic monomer is not particularly limited, and examples thereof include, (meth)acrylonitrile, (meth)acrylamide, N,N-dimethyl (meth)acrylamide, N,N-diethyl (meth)acrylamide, and 2-hydroxyethyl (meth)acrylamide, (meth)acryloyl morpholine, and the like. These may be used alone, or two or more thereof may be mixed to be used. The (meth)acrylic monomer preferably contains a (meth)acrylate compound.

The styrene monomer is not particularly limited, and examples thereof include styrene, o-methylstyrene, m-methylstyrene, p-methylstyrene, α-methylstyrene, p-phenylstyrene, p-ethylstyrene, 2,4-dimethylstyrene, p-tert-butylstyrene, p-n-hexylstyrene, p-n-octylstyrene, p-n-nonylstyrene, p-n-decylstyrene, p-n-dodecylstyrene, styrenesulfonic acid, and the like. These may be used alone, or two or more thereof may be mixed to be used.

Other polymerizable monomers are not particularly limited, and known monomers that can be polymerized with these monomers can be used. These may be used alone, or two or more thereof may be mixed to be used.

In the aqueous emulsion, when water volatilizes in a drying step, the polymer particles gather together to be fused. More specifically, the self-crosslinking aqueous emulsion means a matter that in the drying step, when the polymer particles are fused to each other, a crosslinking reaction is carried out between the polymer particles or between the polymer particle and the surface of the adherend.

A mechanism of self-crosslinking of the aqueous emulsion is not particularly limited. The self-crosslinking here means a form in which the polymer particles themselves are involved in the crosslinking reaction to be crosslinked, for example, when water volatilizes during the drying step, a functional group pendant on a polymer particle reacts with a functional group pendant on another polymer particle, a functional group pendant on a polymer particle reacts with a functional group present on the adherend, a functional group pendant on a polymer particle reacts with a crosslinking agent that has two or more functional groups and can crosslink two or more polymer particles, which can be contained in the aqueous emulsion, or the like. Examples of the reaction form of self-crosslinking include, but are not limited to, a dehydration condensation reaction, and the like. Among these reaction forms, the dehydration condensation reaction is preferable from the viewpoint of good storage stability of the sealing agent for a screwing member before applying and drying. That is, it is preferable that the self-crosslinking reaction of the component (B) is due to a dehydration condensation reaction.

The self-crosslinking aqueous emulsion that undergoes the dehydration condensation reaction is not particularly limited. Examples the self-crosslinking aqueous emulsion that undergoes the dehydration condensation reaction includes carbonyl-hydrazide crosslinked form and the like such that the polymer particles having a carbonyl group as a pendant functional group react with polyhydrazide, which is a component having two or more functional groups and serving as a crosslinking agent when polyhydrazide is contained in an aqueous emulsion, to self-crosslink. Further, a silane crosslinked form and the like in which polymer particles having silane having a hydrolyzable group as a pendant functional group react with a hydroxyl group and the like of an adherend to self-crosslink can be mentioned. However, the self-crosslinking mechanism for the dehydration condensation reaction is not limited to these. Among these self-crosslinking mechanisms that carry out the dehydration condensation reaction, carbonyl-hydrazide crosslinked form and silane crosslinked form are more preferable, and the carbonyl-hydrazide crosslinked form is more preferable, from the viewpoint of better adhesion to the screwing member. That is, the self-crosslinking reaction of the component (B) is preferably carbonyl-hydrazide crosslinking (component (B) is a carbonyl-hydrazide cross-linked aqueous emulsion) or silane crosslinking (component (B) is a silane cross-linked aqueous emulsion), and more preferably silane crosslinking.

The glass transition temperature Tg of the cured product of the component (B) is not particularly limited as long as it is 0°C or higher. Among these, preferably 0°C or higher and lower than 50°C, more preferably 0°C or higher and lower than 40°C, still more preferably 0°C or higher and lower than 30°C, and particularly preferably 0°C or higher and lower than 20°C. Within the above range, it is possible to obtain a sealing agent having better adhesion to the adherend. On the other hand, if the glass transition temperature Tg of the cured product of the component (B) is lower than 0°C, the adhesion of the sealing agent to the adherend becomes insufficient.

The glass transition temperature Tg of the cured product of the component (B) above means a value obtained by converting the glass transition temperature $Tg_a$ (K) at the absolute temperature obtained by the following (Equation 1) into the temperature in degrees Celsius. Specifically, assuming that the monomers constituting a copolymer are M1, M2, M3 ... Mn, the glass transition temperature (K) of the homopolymer obtained from each monomer is Tg1, Tg2, Tg3 ... Tgn, and a weight ratio (weight fraction) of the constituent units derived from each monomer in the copolymer is W1, W2, W3 ... Wn, the glass transition temperature Tg of the copolymer can be calculated from the following (Equation 1) (FOX equation). Here, W1 + W2 + W3 + ... + Wn = 1. Note that, the details are described in Bulletin of the American Physical Society, Series 2, Volume 1, Issue 3, first, page 23 (1956). In addition, for the glass transition temperatures ((Tg1) to (Tgn)) of homopolymers of various monomers for calculation by the FOX equation are, for example, the numerical values and the like described in The finish & paint (Toryo Publisher, 10 (No.358), 1982) can be adopted.

[Equation 1]

$$1/Tg_a = W1/Tg1 + W2/Tg2 + ... + Wn/Tgn \quad (\text{Equation 1})$$

Here, each Wi/Tgi constituting the right side of the above equation 1 (where each i is a natural number from 1 to n) corresponds to each monomer Mi constituting the copolymer. Therefore, on the right side of the above equation 1, the number of Wi/Tgi is the same as the number of types of monomers constituting the copolymer (n when each i is 1 to n). Therefore, for example, when the (meth)acrylic-styrene copolymer is a binary copolymer formed of the monomers M1 and M2, the above equation 1 is expressed as $1/Tg_a = W1/Tg1 + W2/Tg2$. In addition, for example, when the (meth)acrylic-styrene copolymer is a ternary copolymer formed of the monomers M1, M2 and M3, the above equation 1 is expressed as $1/Tg_a = W1/Tg1 + W2/Tg2 + W3/Tg3$.

The component (B) essentially contains a (meth)acrylic-styrene copolymer in which a glass transition temperature Tg of the cured product is 0°C or higher and water, may also contain a crosslinking agent and other components.

The self-crosslinking aqueous emulsion having a (meth)acrylic-styrene copolymer in which a glass transition temperature Tg of the cured product is 0°C or higher may be a commercially available product or a synthetic product. Examples of the commercially available self-crosslinking aqueous emulsion having a carbonyl-hydrazide crosslinked form in which a (meth)acrylic-styrene copolymer having a glass transition temperature Tg of the cured product is 0°C or higher include ACRONAL (registered trademark) YS-756ap (Tg: 16°C), YJ-2716Dap (Tg: 25°C), YJ-2718Dap (Tg: 47°C), YJ-2720Dap (Tg: 9°C), JONCRYL (registered trademark) PDX-7430 (Tg: 34°C), PDX-7164 (Tg: 8°C), 8380 (Tg: 17°C), 8383 (Tg: 26°C), and the like, which are available from BASF Japan Co., Ltd. Examples of the commercially available product of a self-crosslinking aqueous emulsion having a silane crosslinked form in which a (meth)acrylic-styrene copolymer in which a glass transition temperature Tg of the cured product of 0°C or higher include ACRONAL (registered trademark) YS-800ap (22°C), and the like. These may be used alone, or two or more thereof may be mixed to be used.

The solid content concentration of the component (B) is not particularly limited, and is preferably 20 to 70% by mass, more preferably 25 to 65% by mass, and still more preferably 30 to 60% by mass.

The amount of the solid content of the component (B) added to 100 parts by mass of the component (A) is not particularly limited, and is preferably 15 to 80 parts by mass, more preferably 20 to 70 parts by mass, and still more preferably 20 to 60 parts by mass. Within the above range, the adhesion is more excellent even when water adheres to the processed bolt. In addition, the resistance torque when tightening the processed bolt with a nut or the like may be less than 3 N·m, which may be better.

<Component (C)>

The sealing agent for a screwing member according to one embodiment of the present invention contains a non-urethane-based nonionic thickener as a component (C). The component (C) is not particularly limited as long as it is a non-urethane-based nonionic thickener. The shape of the component (C) may be liquid or solid, and is preferably liquid. Examples of the liquid non-urethane-based nonionic thickener include, but are not limited to, an aminoplast-based nonionic thickener, an ethylene oxide-added nonionic thickener, and the like. Among these, the aminoplast-based nonionic thickener is preferable. In addition, these may be used alone, or two or more thereof may be mixed to be used.

Here, the aminoplast refers to a resin synthesized by a condensation reaction between a compound containing an amino group and formaldehyde.

As the non-urethane-based nonionic thickener, a commercially available product or a synthetic product may be used. Examples of the commercially available product of the aminoplast-based nonionic thickener include OPTIFLO (registered trademark) L100, H370VF, H600VF, TVS-VF, and the like, which are available from BYK. Examples of commercially available products of the ethylene oxide-added nonionic thickener include ER-10, ER-20, ER-30, ER-40, and the like, which are available from ADEKA. Note that, the component (C) is not limited to these.

When the component (C) is a liquid, it is preferably a thickening component (hereinafter, an active component) dispersed in a solvent. Since the active component is dispersed in the solvent in advance, the thickening component can be uniformly dispersed when it is added to the sealing agent for a screwing member. Examples of the solvent include, but are not limited to, water, N-methyl-2-pyrrolidone, polyethylene glycol, and the like.

In the embodiment of the present invention, the concentration of the active component of the component (C) is not particularly limited, and is preferably 1 to 70% by mass, more preferably 2 to 65% by mass, and still more preferably 3 to 60% by mass.

In the embodiment of the present invention, the amount of the active component of the component (C) added is 0.15 to 5.0 parts by mass with respect to 100 parts by mass of the solid content of the component (B). If the amount of the active component of the component (C) added is less than 0.15 parts by mass or more than 5.0 parts by mass with respect to 100 parts by mass of the solid content of the component (B), it is difficult to ensure the adhesion to the adherend and to suppress the occurrence of sagging between the application to the bolt and the drying. The amount of the active component of the component (C) added to 100 parts by mass of the solid content of the component (B) is preferably 0.15 to 5.00 parts by mass, more preferably 0.20 to 4.5 parts by mass, and still more preferably 0.22 to 4.0 parts by weight. Within the above range, the adhesion to the adherend is better ensured, and the sagging is less likely to occur between application to the bolt and drying.

<Optional components>

The sealing agent for a screwing member according to one embodiment of the present invention contains the above-mentioned component (A), component (B), and component (C) as main constituents, and can further contain other components (optional components), if necessary. The optional component is not particularly limited as long as it does not interfere with the effects of the present invention, and examples thereof include a solvent, a pH adjusting agent, a rust preventive, a defoaming agent, a pigment (excluding the component (A)), an adhesion imparting agent, a dispersant, and the like.

The solvent is not particularly limited, and examples thereof include water, alcohol, N-methyl-2-pyrrolidone, and the like. Among these, it is preferable to use water as a solvent for the component (B) or the same solvent as that used for the component (C), and the solvent as an optional component is preferably water.

The content of the solvent (excluding those contained in the component (B) and the component (C)) is not particularly limited, and is preferably 0 to 80% by mass, more preferably 1 to 70% by mass, and still more preferably 1.5 to 50% by mass of the total amount of the sealing agent (including any component).

The pH adjusting agent is not particularly limited, and examples thereof include any alkaline aqueous solution and the like. Even in an alkaline aqueous solution, for example, aqueous ammonia, lithium hydroxide, potassium hydroxide, sodium hydroxide, monomethylamine, dimethylamine, morpholine, N-methylmorpholine, N,N-dimethylethanolamine, N-($\beta$-aminoethyl) ethanolamine, N-methylethanolamine, N-methyldiethanolamine, and the like are preferable. By using these, it is possible to prevent rust from being generated before the sealing agent is applied to a bolt such as iron and dried.

The content of the pH adjusting agent in the sealing agent for a screwing member is not particularly limited, and is preferably 0.001 to 8% by mass, more preferably 0.01 to 6% by mass, and still more preferably 0.01 to 5% by mass of the total amount of the sealing agent (including optional components).

The rust preventive is not particularly limited, and preferable examples thereof include sodium benzoate, benzotriazole, chromate (such as zinc chromate, calcium chromate, strontium chromate, barium chromate, zinc potassium chromate, tetrabasic zinc chromate, and the like), phosphate (such as zinc phosphate, zinc phosphosilicate, zinc aluminum phosphate, zinc calcium phosphate, calcium phosphate, aluminum pyrophosphate, calcium pyrophosphate, aluminum dihydrogen tripolyphosphate, aluminum metaphosphate, calcium metaphosphate, zinc phosphomolybdate, aluminum phosphomolybdate, and the like), nitrite (such as sodium nitrite, calcium nitrite, strontium nitrite, barium nitrite, ammonium nitrite, and the like), phytate (such as zinc phytate, sodium phytate, potassium phytate, calcium phytate, and the like), tannate (for example, sodium tannate, potassium tannate, and the like), polyamine compound (such as N-(2-hydroxyethyl) ethylenediaminetriacetic acid (HEDTA), ethylenediaminetetraacetic acid (EDTA), diethylenetriamine pentaacetic acid (DTPA), propylenediaminetetraacetic acid (PDTA), iminodiacetic acid, nitrilotriacetic acid (NTA), diethylenetriamine pentamethylene phosphonic acid (DTPMP), and these alkali metal salts); an intercalating compound made by intercalating monoalkylamines, polyamines, quaternary ammonium ions, and the like into layered phosphates such as aluminum dihydrogen tripolyphosphate and the like; MIO, lead cyanamide, ammon metavanadate, ammon zircofluoride, zinc molybdate, aluminum molybdate, barium borate, and organic nitro compound zinc salt, and the like.

The amount of the rust preventive added to the sealing agent for a screwing member is not particularly limited, and is preferably 0.01 to 10% by mass, more preferably 0.1 to 8% by mass, still more preferably 0.1 to 5% by mass, and particularly preferably 0.1 to 3% by mass of the total amount of the sealing agent (including optional components).

The defoaming agent is not particularly limited, and for example, various compounds and compositions having a defoaming effect such as a surfactant can be used. The defoaming agent is not particularly limited, and for example, a silicone defoaming agent (silicone-based surfactant), a modified silicone-based defoaming agent, an acetylene alcohol-based surfactant, a silica-based defoaming agent, wax, a polyether-modified polydimethylsiloxane, a paraffinic oil, a defoaming aliphatic derivative, and the like are preferable.

The amount of the defoaming agent added to the sealing agent for a screwing member is not particularly limited, and is preferably 0.01 to 5% by mass, more preferably 0.05 to 3% by mass, and still more preferably 0.1 to 2% by mass of the total amount of the sealing agent (including optional components).

As the pigment, the component (A) is excluded, and an organic pigment, an inorganic pigment, or the like are preferable. The organic pigment is not particularly limited, and examples thereof include isoindrinone, isoindoline, azomethine, perylene, anthraquinone, dioxazine, phthalocyanine, and the like, and the inorganic pigment is not particularly limited, and preferable examples thereof include carbon black, ultramarine blue, prussian blue, red iron oxide, titanium oxide (for example, titanium dioxide), lithopone, and the like. Among these, titanium oxide is preferable. Further, these pigments may be surface-treated and have a self-dispersing activity with respect to an aqueous medium.

As the pigment, a commercially available product or a synthetic product may be used. Examples of commercially available products of the inorganic pigment include TITANIX (registered trademark) JA-1 available from TAYCA CORPORATION, which is titanium oxide, and the like.

The amount of the pigment added to the sealing agent for a screwing member is not particularly limited, and is preferably 0.01 to 5% by mass, more preferably 0.05 to 3% by mass, and still more preferably 0.1 to 2% by mass of the total amount of the sealing agent (including optional components).

[Method of producing sealing agent for screwing member]

A method for producing a sealing agent for a screwing member is not particularly limited as long as it includes mixing the component (A), the component (B), and the component (C) such that an active component of the component (C) is 0.15 to 5.00 parts by mass with respect to 100 parts by mass of a solid content of the component (B). In addition to the component (A), the component (B), and the component (C), the above optional components may be further added, if necessary. The mixing method when mixing each component is not particularly limited, and a known method can be appropriately used. Further, a mixing temperature is not particularly limited, and the mixing time is not particularly limited. Note that, the preferable embodiments (type, characteristics, structure, content, and the like) of each component are the same as those described above for each component.

<Screwing member coated with sealing agent for screwing member>

The sealing agent for a screwing member according to one embodiment of the present invention has excellent adhesion to the screwing member. In particular, even if the sealing agent for a screwing member is applied to the screw portion to form a coating film, due to the friction caused by tightening the screwing member to a female screw, a substrate, or the like, the coating film is significantly suppressed from peeling off from the interface of the screw portion (preferably, the peeling off does not occur). The fact that the peeling off is significantly suppressed (preferably, the peeling off does not occur) means that the coating formation on the screw portion can be continued. Therefore, for example, in a member that needs to prevent leakage of liquid or gas, it is possible to prevent the leakage of liquid or gas from the screw portion of the member. Therefore, the screwing member coated with the sealing agent for a screwing member is useful as a pre-coat type screw sealing agent. In particular, in the sealing agent for a screwing member according to one embodiment of the present invention, even if the nut is tightened with water adhering to the processed bolt, the coating film is significantly suppressed from peeling off from the interface of the screw portion. Therefore, the screwing member, to which the sealing agent for a screwing member according to one embodiment of the present invention is applied, for preventing the leakage of liquid such as water is particularly useful as a pre-coat type screw sealing agent. Here, in the present specification, with regard to conditions of the drying step (or may be simply referred to as "drying") when producing the screwing member to which the sealing agent for a screwing member is applied, temperature is not particularly limited, and is preferably 15 to 150°C, and more preferably 20 to 120°C. Further, time is not particularly limited, and is preferably 1 to 300 minutes, more preferably 3 to 120 minutes, and still more preferably 5 to 60 minutes.

[Screwing member]

Another aspect of the present invention relates to a screwing member to which a sealing agent for a screwing member is applied. That is, it can be said that the aspect relates to a screwing member in which at least a part of the screw portion is covered with a coating film of the sealing agent for a screwing member. In the present specification, "covered with a coating film of the sealing agent for a screwing member" means "covered with a dry film of the sealing agent for a screwing member". As the screwing member, it is preferable that 80% or more of the screw portion is covered with the coating film of the sealing agent for a screwing member, and it is more preferable that the entire screw portion is covered. Further, the entire screwing member including the screw portion may be covered with the coating film of the sealing agent for a screwing member. Examples of the screwing member include, but are not limited to, a screw joint such as a nipple having a screw portion, a socket, a tapered plug, an elbow, and the like, an inner circumference of the nut, and the like, in addition to the above-mentioned screws. The material of the screwing portion agent is not particularly limited, and examples thereof include iron, aluminum, gold, stainless steel, SUS, and the like, and these may be plated with a galvanization chromate treatment or the like, or may be coated with a rust preventive.

Examples

Hereinafter, the sealing agent for a screwing member according to one embodiment of the present invention will be described in more detail with reference to the following examples and comparative examples. However, these examples and comparative examples are for the purpose of assisting the understanding of the present invention, and the present invention is not limited to these examples. In addition, unless otherwise specified, "%" and "parts" mean "% by mass" and "parts by mass", respectively. Further, in the following examples, unless otherwise specified, the operation was performed under the conditions of room temperature (25°C)/relative humidity 40 to 50% RH.

<Production of sealing agent for screwing member>

Sealing agents for a screwing member of examples and comparative examples were prepared by appropriately stirring and mixing each component with a stirring device according to the compositions indicated in Table 1 below. More specifically, in order to uniformly disperse a filler as a component (A), water (pure water) as a solvent, the filler as the component (A), a pigment (titanium oxide), and a surfactant (available from DKS Co. Ltd., Product name: NOIGEN (registered trademark) ET-115, 0.3 parts by mass) other than each of the following components were first stirred, and then other raw material components were added thereto.

<Component (A)>

- LUBRON (registered trademark) L-5F (atypical polytetrafluoroethylene resin powder with average particle size of D50: 5 $\mu$m, available from DAIKIN INDUSTRIES, Ltd.),
- KT-300M (atypical, polytetrafluoroethylene resin powder with average particle size D50: 40 $\mu$m, available from KITAMURA LIMITED),

<Component (B)>

- ACRONAL (registered trademark) YS-756ap ((meth)acrylic-styrene copolymer, carbonyl-hydrazide crosslinked type, solid content: 49.5%, Tg: 16°C, available from BASF Japan Ltd.),
- ACRONAL (registered trademark) YS-800ap ((meth)acrylic-styrene copolymer, silane crosslinked type, solid content: 47%, Tg: 22°C, available from BASF Japan Ltd.),
- JONCRYL (registered trademark) PDX-7430 ((meth)acrylic-styrene copolymer, carbonyl-hydrazide crosslinked type, solid content: 38%, Tg: 34°C, available from BASF Japan Ltd.),

<Component (B')>

- ACRONAL (registered trademark) YJ2741Dap ((meth)acrylic-styrene copolymer, carbonyl-hydrazide crosslinked type, solid content: 56%, Tg: -16°C, available from BASF Japan Ltd.),
- ACRONAL (registered trademark) 7064 ((meth)acrylic copolymer, silane crosslinked type, solid content: 50%, Tg: 15°C, available from BASF Japan Ltd.),
- NEWCOAT KSB-1 ((meth)acrylic copolymer, non-self-crosslinking type, solid content: 45%, Tg: 0°C, available from SHIN NAKAMURA CHEMICAL CO., LTD.),
- POLYSOL (registered trademark) AP-3160A ((meth)acrylic-styrene copolymer, non-self-crosslinking type, solid content: 43%, Tg: 15°C, available from SHOWA DENKO K.K.),

<Component (C)>

OPTIFLO-H600VF (aminoplast-based nonionic thickener, active component: 15%, solvent: water, polyethylene glycol, available from BYK),

<Component (C')>

- BYK-420 (urethane-based nonionic thickener, active component: 51%, available from BYK),
- SN-THICKENER A818 (polycarboxylic acid anion type thickener, active component: 13%, available from SAN NOPCO LIMITED),
- SN-THICKENER 651 (polycarboxylic acid anion type thickener, active component: 25%, available from SAN NOPCO LIMITED),

[Other additional components]

- Pure water (available from KYOEI PHARMACEUTICAL CO., LTD.),
- TITANIX (registered trademark) JA-1 (titanium oxide, available from TAYCA CORPORATION).

The numerical values indicated in Tables 1 and 2 below represent parts by mass added. Note that, the blanks in Table 1 below mean that the corresponding component was not added. Here, since the component (C) in Comparative Example 5 is used in the calculation for calculating the values related to the active component in Table 2 below, for the sake of clarity, the fact that it was not added is referred to as "0.00" parts by mass.

[Table 1]

| Prescription of each sealing agent for screwing member | | | | | | | | | | | | | | |
|---|---|---|---|---|---|---|---|---|---|---|---|---|---|---|
| Raw material | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 | Comparative Example 8 |
| (A) | LUBRON L-5F | 50 | 50 | 50 | 50 | 50 | 50 | 50 | 50 | 50 | 50 | 50 | 50 | 50 |
| | KT-300M | 50 | 50 | 50 | 50 | 50 | 50 | 50 | 50 | 50 | 50 | 50 | 50 | 50 |
| (B) | ACRONAL YS-756ap | 70 | | | 70 | 70 | | | | | | 70 | 70 | 70 | 70 |
| | ACRONAL YS-800ap | | 70 | | | | | | | | | | | | |
| | JONCRVL PDX-7430 | | | 70 | | | | | | | | | | | |
| (B') | ACRONAL YJ2741Dap | | | | | | 70 | | | | | | | | |
| | ACRONAL 7064 | | | | | | | 70 | | | | | | | |
| | NEWCOAT KSB-1 | | | | | | | | 70 | | | | | | |
| | POLYSOL AP-3160A | | | | | | | | | 70 | | | | | |
| (C) | OPTIFLO-H600VF | 0.95 | 0.95 | 0.95 | 0.48 | 2.9 | 0.95 | 0.95 | 0.95 | 0.95 | 0.00 | | | |
| (C') | BYK-420 | | | | | | | | | | | 0.950 | | |
| | SN-THICKENER A818 | | | | | | | | | | | | 0.950 | |
| | SN-THICKENER 651 | | | | | | | | | | | | | 0.950 |
| Other additives | Pure water | 106 | 106 | 106 | 106 | 106 | 106 | 106 | 106 | 106 | 106 | 106 | 106 | 106 |
| | TITANIX JA-1 | 2.1 | 2.1 | 2.1 | 2.1 | 2.1 | 2.1 | 2.1 | 2.1 | 2.1 | 2.1 | 2.1 | 2.1 | 2.1 |

| Prescription of each sealing agent for screwing member | | | | | | | | | | | | | |
|---|---|---|---|---|---|---|---|---|---|---|---|---|---|
| Raw material | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 | Comparative Example 8 |
| Total | 279 | 279 | 279 | 278 | 281 | 279 | 279 | 279 | 279 | 278 | 279 | 279 | 279 |

[Table 2]

| Additional amount of compounds (A) to (C) of each sealing agent for screwing member | | | | | | | | | | | | | |
|---|---|---|---|---|---|---|---|---|---|---|---|---|---|
| | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 | Comparative Example 8 |
| Additional amount of component (A) | 100 | 100 | 100 | 100 | 100 | 100 | 100 | 100 | 100 | 100 | 100 | 100 | 100 |
| Solid content of component (B) or (B') | 34.8 | 33.1 | 26.7 | 34.8 | 34.8 | 39.4 | 35.2 | 31.6 | 30.2 | 34.8 | 34.8 | 34.8 | 34.8 |
| Active component of component (C) or (C') | 0.143 | 0.143 | 0.143 | 0.071 | 0.428 | 0.143 | 0.143 | 0.143 | 0.143 | 0.000 | 0.485 | 0.124 | 0.24 |
| Additional amount of active component of component (C) or (C') with respect to 100 parts by mass of solid content of component (B) or (B') | 0.409 | 0.431 | 0.533 | 0.205 | 1.23 | 0.362 | 0.405 | 0.450 | 0.471 | 0.000 | 1.39 | 0.355 | 0.69 |

<Production of screwing member coated with sealing agent for screwing member>

A method for producing a screwing member (a screwing member in which at least a part of the screw portion is covered with a coating film of a sealing agent for a screwing member) to which the sealing agent for a screwing member is applied by applying the sealing agent for a screwing member described in examples and comparative examples will be described below.

The sealing agent for a screwing member prepared above was adjusted to a viscosity of 150 mPa·s with pure water, and a processed liquid was prepared. More specifically, each composition (sealing agent for each screwing member) was uniformly stirred with a stirrer for 10 minutes, and then each viscosity was measured according to a viscosity measurement method specified in JIS K 7117-2: 1999 (BL type viscometer, 60 rpm, rotor No. 2, 25°C × 55% RH). A processed liquid was prepared by repeatedly performing an operation of adding an appropriate amount of water as a diluent, and uniformly stirring the sealing agent for a screwing member for 10 minutes with a stirrer to measure the viscosity, until the viscosity of the sealing agent for a screwing member reached 150 mPa·s. Subsequently, a bolt (bolt size M10 (diameter) × 1.5 (pitch) × 20 mm (length) hexagon bolt) subjected to a galvanization chromate treatment was prepared. The processed liquid was applied to 80% to 90% of the screw portion (dip application) by lowering the bolt so that it is perpendicular to a liquid surface of the processed liquid, while a hexagonal portion of the bolt was pinched by hand or fixed by a magnet for dip application. Then, after a few seconds, the bolt was slowly taken out from the liquid surface, and then the sealing agent attached to a screw tip was wiped off with a waste cloth while the screw tip was facing downward. After that, within 20 minutes, by heating and drying the bolts after wiping off the sealing agent with a hot air dryer for 80°C × 20 minutes while keeping them facing down without touching the screw tip, a screwing member (pre-coated bolt) to which the sealing agent for a screwing member was applied was produced.

<Characteristic evaluation method for sealing agent for screwing member>

[Sagging]

After performing the dip application on the bolt in the same manner as in the method for producing the screwing member (pre-coated bolt), the sealing agent attached to the screw tip was wiped off with a waste cloth while the screw tip was facing downward. Subsequently, with the tip facing down, the bolt after wiping the sealing agent was left at room temperature for 1 hour without being put into hot air drying, and the presence or absence of the sagging was checked:

• Evaluation criteria

⊙: Sealing agent did not move from screw portion to tip of screw, and tip could be exposed,
○: Sealing agent moved from screw portion to tip of screw, and sealing agent adheres to tip,
×: Sealing agent moved from screw portion to tip of screw, and then sagging has occurred, thereby adhering to floor.

[Adhesion]

A nut of the same size to the pre-coated bolt produced by the method for producing the screwing member (pre-coated bolt) was tightened to the pre-coated bolt by using a torque wrench, a part, where the sealing agent had been applied, of the bolt, was passed through the nut, and then the adhesion of the sealing agent to the bolt substrate and the maximum resistance torque were checked:

• Evaluation criteria

⊙: Sealing agent does not peel off from bolt interface and maximum resistance torque is less than 3.0 N·m,
○: Sealing agent does not peel off from bolt interface and maximum resistance torque is 3.0 N·m or more,
×: Sealing agent has peeled off from bolt interface.

[Adhesion when water adheres]

A part, where the sealing agent had been applied, of the pre-coated bolt produced by the method for producing the screwing member (pre-coated bolt) was exposed to water for 2 seconds, and the pre-coated bolt with water adhering to the surface within 1 minute after being taken out of the water was evaluated by the same procedure as the above [Adhesion] according to the same evaluation criteria.

Table 3 below indicates the characteristics evaluation results.

[Table 3]

| Characteristics evaluation results of sealing agent for screwing member | | | | | | | | | | | | | |
|---|---|---|---|---|---|---|---|---|---|---|---|---|---|
| Characteristics evaluation results | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 | Comparative Example 8 |
| Sagging | ⊙ | ⊙ | ⊙ | ○ | ⊙ | ○ | ○ | ○ | ○ | × | × | × | × |
| Adhesion | ⊙ | ○ | ○ | ⊙ | ⊙ | × | ○ | ⊙ | ⊙ | ⊙ | ⊙ | × | × |
| Adhesion when water adheres | ⊙ | ○ | ○ | ⊙ | ⊙ | × | × | × | × | ⊙ | ⊙ | × | × |

From the results in Table 3 above, by using a self-crosslinking aqueous emulsion having a (meth)acrylic-styrene copolymer in which a glass transition temperature Tg was 0°C or higher, and a non-urethane-based nonionic thickener, respectively, it was possible to obtain a product having excellent adhesion and adhesion when water adhered without sagging.

In Examples 1 to 3, various additional amounts were fixed and the type of component (B) was changed. In Examples 4 and 5, the amount of the component (C) added was changed for the formulation of Example 1. It was found that these were excellent in the evaluation items of sagging, adhesion, and adhesion when water adhered. Among them, in Example 1 using one having 16°C of the glass transition temperature Tg, in both the adhesion evaluation and the adhesion evaluation when water adhered, the maximum resistance torque when tightening the nut was as low as 3.0 N·m or less, which was a good result.

Further, from Example 4, it was found that when the amount of the active component of the component (C) added was 0.205 parts by mass with respect to 100 parts by mass of the solid content of the component (B), sagging did not occur, but the sealing agent moved from the screw portion to the tip of the screw. From this result, it was found that the amount of the active component of the component (C) added was preferably 0.205 parts by mass or more with respect to 100 parts by mass of the solid content of the component (B). Further, from Examples 1 and 5, it was found that when the amount of the active component of the component (C) added was 0.409 parts by mass and 1.23 parts by mass with respect to 100 parts by mass of the solid content of the component (B), sagging did not occur, but the sealing agent did not move from the screw portion to the tip of the screw.

In Comparative Examples 1 to 4, comparative components of the component (B) of Example 1 were used, respectively. It was found that in a case where a self-crosslinking aqueous emulsion having a (meth)acrylic-styrene copolymer in which a glass transition temperature Tg was 0°C or lower was used instead of the component (B) as in Comparative Example 1, the adhesion was poor. It is considered that the reason for this is that the sealing agent is more flexible than when one having 0°C or higher of the glass transition temperature Tg was used, so that it did not withstand the friction with the nut. As in Comparative Example 2, in a case of using an aqueous emulsion having a (meth)acrylic copolymer in which a transition temperature was 0°C or higher, instead of a (meth)acrylic-styrene copolymer, the result was that the adhesion was good, but the resistance torque when tightening the nut was 3.0 N·m or more, adhesion when water adhered was poor. In Comparative Examples 3 and 4, respectively using a (meth)acrylic copolymer and a (meth)acrylic-styrene copolymer, in which a glass transition temperature Tg was 0°C or higher but not self-crosslinking, instead of the component (B), the result was that the adhesion was good and the adhesion when water adhered was poor. It is considered that the reason for this is that since the fused polymer particles are not crosslinked, water easily permeates, and as a result, the sealing agent absorbs water and the adhesion to the bolt interface is lost.

In Comparative Example 5, the component (C) and a comparative component of the component (C) were not used, and in Comparative Example 6, a urethane-based nonionic thickener was used instead of the component (C). As a result of these, although the adhesion and the adhesion when water adhered were good, sagging occurred.

In Comparative Example 7 and Comparative Example 8, a polycarboxylic acid anion type thickener was used instead of the component (C). As a result of these, sagging occurred, and the adhesion and the adhesion when water adhered were poor.

Industrial Applicability

According to the present invention, it is possible to provide a sealing agent for a screwing member which has no sagging occurred when being applied to a screwing member and dried, and is excellent in adhesion such that even in a state where water adheres to a processed bolt, a resin does not peel off from an interface when tightened with a nut.

This application is based on Japanese Patent Application No. 2018-236486 filed on December 18, 2018, the disclosure of which is incorporated in its entirety by reference.

**Claims**

1. A sealing agent for a screwing member comprising the following component (A), component (B), and component (C), 0.15 to 5.00 parts by mass of active components of the component (C) is contained with respect to 100 parts by mass of a solid content of the component (B):

    component (A): a filler;
    component (B): a self-crosslinking aqueous emulsion having a (meth)acrylic-styrene copolymer in which a glass transition temperature Tg of a cured product is 0°C or higher; and
    component (C): a non-urethane-based nonionic thickener.

**2.** The sealing agent for a screwing member according to claim 1, wherein a self-crosslinking reaction of the component (B) is due to a dehydration condensation reaction.

**3.** The sealing agent for a screwing member according to claim 1 or 2, wherein the self-crosslinking reaction of the component (B) is a carbonyl-hydrazide crosslink or a silane crosslink.

**4.** The sealing agent for a screwing member according to any one of claims 1 to 3, wherein the component (C) is an aminoplast-based nonionic thickener.

**5.** The sealing agent for a screwing member according to any one of claims 1 to 4, wherein 15 parts by mass or more and 80 parts by mass or less of a solid content of the component (B) is contained with respect to 100 parts by mass of the component (A).

**6.** A screwing member in which at least a part of a screwing portion is covered with the sealing agent for a screwing member according to any one of claims 1 to 5.

**7.** A method for producing a sealing agent for a screwing member according to any one of claims 1 to 5, comprising: mixing the component (A), the component (B), and the component (C) such that an active component of the component (C) is 0.15 to 5.00 parts by mass with respect to 100 parts by mass of a solid content of the component (B) .

## INTERNATIONAL SEARCH REPORT

| International application No. |
| --- |
| PCT/JP2019/043985 |

A. CLASSIFICATION OF SUBJECT MATTER
Int. Cl. C09K3/10(2006.01)i, F16B39/22(2006.01)n
FI: C09K3/10 E, C09K3/10 Z, F16B39/22

According to International Patent Classification (IPC) or to both national classification and IPC

B. FIELDS SEARCHED

Minimum documentation searched (classification system followed by classification symbols)
Int. Cl. C09K3/10, F16B39/22

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
| --- | --- | --- |
| X | WO 2010/050572 A1 (THREE BOND CO., LTD.) 06 May 2010, claims, paragraphs [0026]-[0053], table 2 examples (in particular, comparative examples 1, 2, 8) | 1-3, 5-7 |
| A | WO 2008/044751 A1 (TOPURA CO., LTD.) 17 April 2008, claims, examples | 1-7 |
| A | JP 11-131016 A (ASAHI CHEMICAL INDUSTRY CO., LTD.) 18 May 1999, claims, examples | 1-7 |
| A | JP 06-080983 A (MEIDOO KK) 22 March 1994, claims, examples | 1-7 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 23.01.2020 | 04.02.2020 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

International application No.

PCT/JP2019/043985

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-138340 A (NSK LTD.) 24 June 2010, claims, examples | 1-7 |
| A | JP 2015-063601 A (THREE BOND CO., LTD.) 09 April 2015, claims, examples | 1-7 |

Form PCT/ISA/210 (continuation of second sheet) (January 2015)

**INTERNATIONAL SEARCH REPORT**
Information on patent family members

| International application No. |
| --- |
| PCT/JP2019/043985 |

| Patent Documents referred to in the Report | Publication Date | Patent Family | Publication Date |
| --- | --- | --- | --- |
| WO 2010/050572 A1 | 06.05.2010 | US 2011/0213069 A1 claims, paragraphs [0032]-[0082], table 2, comparative examples 1, 2, 8 CN 102203199 A | |
| WO 2008/044751 A1 | 17.04.2008 | US 2010/0034615 A1 claims, examples EP 2000680 A2 CN 101371052 A | |
| JP 11-131016 A | 18.05.1999 | (Family: none) | |
| JP 06-080983 A | 22.03.1994 | (Family: none) | |
| JP 2010-138340 A | 24.06.2010 | (Family: none) | |
| JP 2015-063601 A | 09.04.2015 | US 2016/0208150 A1 claims, examples EP 3050903 A1 CN 105555807 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006052296 A
- JP 2010138340 A
- JP 2018236486 A

**Non-patent literature cited in the description**

- **1956.** *Bulletin of the American Physical Society,* vol. 1 (3), 23
- The finish & paint. Toryo Publisher, 1982, vol. 10